Europäisches Patentamt

European Patent Office

Office européen des brevets

(19)

(11) Veröffentlichungsnummer : **0 514 363 A1**

(12) **EUROPÄISCHE PATENTANMELDUNG**

(21) Anmeldenummer : 92890083.6

(22) Anmeldetag : 08.04.92

(51) Int. Cl.$^5$ : **C08L 93/00,** E01C 7/30,
E01C 13/00

(30) Priorität : 15.04.91 AT 783/91

(43) Veröffentlichungstag der Anmeldung :
19.11.92 Patentblatt 92/47

(84) Benannte Vertragsstaaten :
BE CH DE DK ES FR GB GR IT LI LU MC NL PT
SE

(71) Anmelder : ÖMV Aktiengesellschaft
Otto Wagner-Platz 5
A-1091 Wien (AT)

(72) Erfinder : Steidl, Heinrich
Birkengasse 11
A-2542 Kottingbrunn (AT)
Erfinder : Loibl, Andreas
Dietrichgasse 31/2/3
A-1030 Wien (AT)

(74) Vertreter : Widtmann, Georg, Dipl.-Ing. Dr.
techn.
Clusiusgasse 2/8
A-1090 Wien (AT)

(54) **Bitumenfreie Mischung, Baustoffmischung und wässrige Emulsion.**

(57)    Bitumenfreies Bindemittel für Baustoffe, insbesondere für Beläge für Verkehrsflächen, Sportflächen od. dgl., mit natürlichen Harzen, insbesondere thermoplastischen, Kunststoffen, gegebenenfalls Ölen, Pigmenten, Zuschlagsstoffen od. dgl., wobei es 50,0 Gew.-% bis 90,0 Gew.-%, insbesondere 60,0 Gew.-% bis 70,0 Gew.-%, kalziumgehärtetes Tallölpech, 3,0 Gew.-% bis 25,0 Gew.-%, insbesondere 10,0 Gew.-% bis 20,0 Gew.-%, insbesondere thermoplastische, Kunststoffe und 0,0 Gew.-% bis 20,0 Gew.-%, insbesondere 5,0 Gew.-% bis 10,0 Gew.-%, insbesondere naphthenische, Öle enthält.

EP 0 514 363 A1

Die Erfindung bezieht sich auf ein bitumenfreies Bindemittel für Baustoffe, insbesondere Beläge für Verkehrsflächen, Sportflächen od. dgl., mit natürlichen Harzen, auf eine Baustoffmischung mit diesen Bindemitteln sowie auf eine wäßrige Emulsion mit diesen Bindemitteln.

Baustoffe müssen, je nach ihrem Einsatzzweck, hohe Aufnahmefähigkeit für Zugkräfte, Druckkräfte, Abriebkräfte oder auch gegen Inanspruchnahme von chemischen Mitteln, wie beispielsweise Steinsalz, Harnstoff als auch Beständigkeit gegen UV-Strahlen, aufweisen. Neben diesen Eigenschaften wird vielfach erwünscht, daß die Bindemittel möglichst transparent sind und keine Eigenfarbe aufweisen. Dadurch ist unter anderem die Möglichkeit gegeben, mit einem relativ geringen Anteil von Pigmenten eine Farbgebung der Baustoffe zu erreichen.

Bitumenhältige Bindemittel für Baustoffe sind seit langem literaturbekannt, wobei das Bindemittel einen hohen Gehalt an Kohlenstoff bzw. an höherkondensierten Kohlenwasserstoffen aufweist, so daß es selbst bzw. auch die Mischungen mit demselben von Farbe Schwarz sind. Dadurch wird sowohl auf der einen Seite der erforderlichen farblichen Vielfalt bei Bauvorhaben nicht Rechnung getragen als auch der für Verkehrsflächen aber auch Sportflächen erforderlichen Farben mit einem höheren Refektionsvermögen als schwarz nicht Rechnung getragen.

Es sind eine hohe Anzahl von Kunststoffen bekannt, die für sich alleine oder gemeinsam mit anorganischen Bindemitteln, wie beispieleweise Kalk oder Zemente, als Binder für Baustoffmischungen dienen.

Aus der US-PS 4,374.946 wird eine Mischung zur Füllung von Betonfugen bekannt, die neben ataktischem Polypropylen, Kautschuk und Tallpech aufweist. Eine derartige Mischung soll lediglich ein gutes Haftvermögen gegenüber Beton aufweisen, jedoch sind mit Ausnahme der flexiblen Dehnbarkeit Eigenschaften, wie Abriebbeständigkeit, Zugfestigkeit, Druckfestigkeit od. dgl., von untergeordneter Bedeutung.

Aus der US-PS 3,951.676 wird eine Baustoffmischung bekannt, die mit einer Wasser in Ölemulsion aufgebaut ist, welche Bitumen und ein Zinn-, Magnesium-, Kupfer-, Aluminium- oder Eisensalz eines Tallöles enthält.

Aus der WO 89/06259 wird eine Mischung aus einem natürlichen Harz, einem künstlichen Harz, wie z. B. thermoplastische Elastomere, Polyethylen, Ethylvinylacetat, Polypropylen, Polybutylen, Nitrile, Butadien, Styrol oder Butadien, Isopren, Copolymere sowie mit einem Öl, Paraffinöl und einem Dickungsmittel, z. B. Hydroxymethylzellulose od. dgl., für Straßenbeläge bekannt. Eine derartige Mischung Kann wiederverwertet werden. Aut Grund der hellen Farbe ist auch eine Einfärbung möglich. Durch den zwingend vorgesehenen Einsatz von Schmier- und Verdickungsmittel wird der Einsatz derartiger Mischungen auf Sonderfälle für Beläge, bei welchen ein höherer Abrieb und erhöhte Gleitverhalten von untergeordneter Bedeutung ist, beschränkt.

Die vorliegende Erfindung hat sich zur Aufgabe gesetzt, ein Bindemittel bzw. eine Baustoffmischung oder eine Emulsion zu schaffen, die möglichst transparent ist, womit eine hohe Reflexion auch bei Finsternis gegeben ist bzw. eine große Möglichkeit zur Einfärbung mit Pigmenten vorliegt, die den Einsatz von natürlich vorkommenden Stoffen, die als Nebenprodukte bei chemischen Aufschlüssen anfallen und die gleichzeitig zumindest die Standfestigkeit von den bislang eingesetzten Produkten aufweisen.

Seit dem das Sulfatzellstoffverfahren im vorigen Jahrhundert eingeführt wurde, fällt aus dem Verfahren eine sogenannte Schwarzlauge an, aus der Tallöl gewonnen werden kann. Das Tallöl besteht im wesentlichen aus Harzund Fettsäuren und unverseifbaren Stoffen. Je nach Herkunftsort des Tallöles sind in engeren Grenzen unterschiedliche Zusammensetzungen gegeben, wobei die Eigenschaften im wesentlichen erhalten bleiben. Eine Aufarbeitung des Tallöles erfolgt üblicherweise auf destillativem Wege, wobei, um eine möglichst schonende Behandlung zu realisieren, unter Vakuum gearbeitet wird. Es können hiebei u. zw. Fettsäuren, Harzsäuren als auch eine Zwiechenfraktion, gewonnen werden. Als Rückstand verbleibt das sogenannte Tallölpech, das entweder nach Behandlung mit Sauerstoff oder mit Kalk zur Herstellung von Kunststoffplatten, Druckfarben, Dachpappen od. dgl. Verwendung finden kann.

Produkte, welche mit gehärtetem Tallöl als alleiniges Bindemittel aufgebaut sind, weisen schlechte mechanische Eigenschaften, wie z. B. Abrieb, Wärmebeständigkeit, Wiederverarbeitbarkeit aber auch gegebenenfalls, wenn mit Sauerstoff gehärtet wurde, eine dunkle Farbe auf.

Das erfindungsgemäße bitumenfreie Bindemittel für Baustoffe, insbesondere für Beläge für Verkehrsflächen, Sportflächen od. dgl., mit natürlichem Harz, insbesondere thermoplastischem, Kunststoff, gegebenenfalls Ölen, Pigmenten, Zuschlagsstoffen u. dgl., besteht im wesentlichen darin, daß es 50,0 Gew.-% bis 90,0 Gew.-%, insbesondere 60,0 Gew.-% bis 70,0 Gew.-%, kalziumgehärtetes Tallölpech, 3,0 Gew.-% bis 25,0 Gew.-%, insbesondere 10,0 Gew.-% bis 20,0 Gew.-%, Kunststoffe, insbesondere thermoplastische, Kunststoffe sowie 0,0 Gew.-% bis 20,0 Gew.-%, insbesondere 5,0 Gew.-% bis 10,0 Gew.-%, Öle, insbesondere naphthenische, Öle, enthält.

Durch den Einsatz von kalziumgehärtetem Tallölpech wird ein Produkt, das als Nebenprodukt bei der Aufbereitung von harzhältigen Hölzern entsteht, einem hochwertigen Einsatzzweck zugeführt, wobei fossile Reserven, sei es in Form von Bitumen oder Asphalten oder auch von Erdgas und Erdölen, aus welchen künstliche Bindemittel hergestellt werden, geschont werden können. Durch den Einsatz von kalziumgehärtetem Tallölpech wird zum Unterschied von anders gehärteten Tallölpechen, insbesondere jenen, die mit Sauerstoff umgewandelt werden, eine besonders schonende chemische Umsetzung erreicht, wobei färbende Nebenprodukte, z. B. Oxidationsprodukte, besonders wirksam und mit geringem Aufwand vermieden werden können. Weist das Bindemittel einen Gehalt von 50,0 Gew.-% bis 90,0 Gew.-% an dem Tallölpech auf, dann läßt sich auf Grund der reaktiven Komponenten des Tallölpeches im Gemisch mit nachstehend beschriebenen Komponenten ein Kolloidalsystem, vergleichbar zu Bitumen, aufbauen.

Liegt ein Gehalt zwischen 60,0 Gew.-% und 70,0 Gew.-% des kalziumgehärteten Tallölpeches vor, dann liegt eine Mischung vor, die sowohl in ihren Eigenschaften als Straßenbelag als auch in ihrer Einfärbbarkeit, z. B. mit hellen Pigmenten, besonders vorteilhaft ausgestaltet ist, da lediglich ein geringer Gehalt an Pigmenten vorliegen muß.

Liegen 5,0 Gew.-% bis 25,0 Gew.-% an Kunststoffen in der Mischung vor, so kann auf Grund der eingebrachten Kunststoffe der Belag entsprechend gewünschter Eigenschaften modifiziert werden, wobei gleichzeitig neben Verbesserung der Abriebeigenschaften, das Elastizitätsverhalten, das Kälteverhalten sowie auch die Transparenz des auch ungefärbten Bindemittelfilmes erhöht werden kann.

Durch einen Zusatz von bis zu 20,0 Gew.-% Ölen, insbesondere naphthenischen Olen, wird das Bindemittel hydrophobiert und weist eine noch bessere Auslaugbeständigkeit gegen Niederschlagewässer auf. Zusätzlich wird die chemische Beständigkeit gegenüber anorganischen Säuren und Laugen sowie deren Salze bedeutend erhöht.

Liegt der Gehalt der Öle zwischen 5,0 Gew.-% bis 10,0 Gew.-% so Kann die Wärmestandfestigkeit (ERK) bei geringerem Gehalt an Bindemittel beibehalten werden. Bei höherer Dosierung wirkt die Ölkomponente lediglich als Weichmacher, womit der Erweichungspunkt absinkt.

Liegen in den bitumenfreien Bindemitteln zwischen 10,0 Gew.-% und 20,0 Gew.-% Styrolbutadienstyrolcopolymer vor, so wird das elastische Verhalten verbessert, und können Netzrisse und Spurrinnenbildung bei sommerlichen Temperaturen vermieden weden. Durch die Kombination von Tallölpech, SBS und Öl läßt sich das Bindemittel so flexibel einstellen, daß mit Gummimehl und Zuschlagstoffen, z. B. ein elastischer Sportplatzbelag, herstellbar ist.

Enthält die Mischung 5,0 Gew.-% bis 25,0 Gew.-% Polyethylen, so wird der Erweichungspunkt und die Haftfestigkeit deutlich erhöht. Zusätzlich wird die Beständigkeit gegen organische Lösungsmittel verbessert. Mischungen über 25,0 Gew.-% Polyethylen zeigen eine hohe Kontraktion beim Abkühlen und geringe Kälteeigenschaften.

Liegt der Gehalt von 10,0 Gew.-% und 20,0 Gew.-% Polyethylen vor, so weist das Bindemittel ein Viskositätsverhalten auf, bei dem bei üblicher asphalttechnologischer Verarbeitung eine zuverlässige Umhüllung des Zuschlagstoffes gewährleistet wird bzw. Entmischungen nicht auftreten.

Enthält der Belag zwischen 0,3 Gew.-% und 10,0 Gew.-% Pigmente, so wird die mechanische Beständigkeit des Belages noch nicht beeinträchtigt, wobei anderseits die Einsatzmöglichkeiten des Belages, insbesondere für Verkehrsflächen und in gestalterischer Hinsicht, wesentlich erweitert werden.

Kommen anorganische Pigmente zum Einsatz, so wird die Lebensdauer der Beläge sowohl hinsichtlich Farbbeständigkeit als auch UV-Beständigkeit wesentlich erhöht.

Eine Baustoffmischung, die mit dem erfindungsgemäßen Bindemittel aufgebaut ist, kann gemäß einem weiteren Merkmal der vorliegenden Erfindung 20,0 Gew.-% bis 97,0 Gew.-%, insbesondere 85,0 Gew.-% bis 97,0 Gew.-%, anorganische Zuschlagsstoffe mit einer maximalen Korngröße von 2,0 mm bis 32,0 mm, insbesondere 4,0 mm bis 16,0 mm, aufweisen. Das erfindungsgemäße Bindemittel ist mit anorganischen Zuschlagsstoffen verträglich und benetzt diese trotz des teilweise hydrophoben Verhaltens der Zuschlagsstoffe hervorragend, so daß mit anorganischen Zuschlagsstoffen besonders tragfähige Beläge erhalten werden können, wobei auf Grund der Zusammensetzung des Bindemittels ein besondere günstiges Verhältnis zwischen anorganischen Zuschlagsstoffen und Bindemittel eingehalten werden kann, das der erfindungsgemäßen Baustoffmischung einen besondere breiten Einsatz ermöglicht.

Enthält die Baustoffmischung 10,0 Gew.-% bis 80,0 Gew.-%, insbesondere 15,0 Gew.-% bis 25,0 Gew.-%, Gummigranualt, mit einer maximalen Korngröße von 1,0 mm bis 50,0 mm, insbesondere 3,0 mm bis 5,0 mm, so kann ein Belag erhalten werden, dessen Reflexionsverhalten, insbesondere für Sportplätze, z. B. Tennisplätze, besondere geeignet ist, wobei gleichzeitig eine den Eigenschaften eines Altgummis entsprechende Einsatzmöglichkeit gegeben ist, ohne daß eine thermische Verwertung und damit gleichzeitig Belastung der Umwelt mit $CO_2$ verursacht wird.

Neben der Einsatzmöglichkeit des erfindungsgemäßen Bindemittels als thermoplastisches Bindemittel, das in den Temperaturgrenzen zwischen 100° C und 220° C verarbeitet werden kann, ist das erfindungsgemäße Bindemittel auch als wäßrige Emulsion mit einem Gehalt von 50,0 Gew.-% bis 70,0 Gew.-%, insbesondere 60,0 Gew.-% bis 65,0 Gew.-%, des Bindemittels und 2,0 Gew.-% bis 5,0 Gew.-%, insbesondere 3,0 Gew.-

% bis 5,0 Gew.-%, Tallöl sowie weitere Zusatzstoffe und Rest Wasser einsatzfähig. Eine derartige Emulsion wird insbesondere durch den Zusatz von Tallöl, dessen emulgierende Wirkungen an sich bekannt sind, erreicht, wobei eine derartige Mischung den Vorzug besitzt, daß selbst in ökologisch besonders anspruchsvollen Gebieten, wie beispielsweise Wasserschutzgebieten od. dgl., auch nicht die geringsten Anteile von fossilen Kohlenwasserstoffen in das Trinkwasser gelangen können, die bereits in geringen Konzentrationen den Einsatz von Wasser, zwar nicht aus gesundheitlicher Sicht, sondern aus geschmacklicher Sicht, verhindern. Die wäßrige Emulsion kann noch insbesondere 0,01 Gew.-% bis 0,1 Gew.-% Kalilauge enthalten, wodurch eine besondere Langzeitlagerstabilität sichergestellt ist.

Im folgenden wird die Erfindung anhand der Beispiele näher erläutert.

Beispiele 1 bis 4:

Die Kaliziumgehärteten Tallölpeche A, B, C, D, E sind unter dem Handelsnamen SULFATPECH GEHARTET bei der Firma KREMS CHEMIE erhältlich. Der Erweichungspunkt, die Nadelpenetration, die Duktilität sowie der Brechpunkt wurden jeweils gemäß ÖNORM B3610 bestimmt. Die Farbe der Kalziumgehärteten Tallölpeche ist schwarz bis hellbraun, und sie weisen lediglich eine geringe Opaktilität auf, so daß diese Bindemittel eine Einfärbung mit geringen Mengen von Pigmenten gestattet.

Beispiele 5 bis 16:

In einem Werner Pfleiderer Doppelschneckenmischer wurden die Mischungen entsprechend der Gew.-% der Tabellen I, II und III angefertigt.

Als Polyethylen wurde ein HDPE MS 6595 von Firma PCD Polymere Ges.m.b.H. mit einem mittleren MFI 190/2,16 von 8 g/10 min eingesetzt.

Als Polypropylen wurde ein Homopolymerisat (BM 55) von Firma PCD Polymere Ges.m.b.H. mit einem mittleren MFI 230/2,16 von 0,4 g/10 min eingesetzt.

Als Styrolbutadienstyrolcopolymerisate (SBS) wurde von der Firma SHELL (CARIFLEX TR-1101) mit einem Styrolgehalt von 30,0 Gew.-% verwendet.

Als Öl wurde ein naphthenbasisches Mineralöl mit einem Siedebereich von 335° C bis 527° C zum Einsatz gebracht. Als Harz wurde ein Tallölharz der Firma KREMS CHEMIE mit der Bezeichnung SARACID PE 100 verwendet.

Wie dem Erweichungspunkt der Mischungen zu entnehmen ist, liegen Bindemittel vor, die bei den für Gußasphalt üblichen Temperaturen verarbeitet werden können, so daß weder andersartige Arbeitsgeräte als sie bislang für die Verarbeitung von Gußasphalt erforderlich waren, verwendet werden müssen, noch daß für das Personal, welches die Verarbeitung vor Ort durchführt, eine zusätzliche Einschulung benötigt wird.

Beispiele 17 bis 22:

Mit den Bindemitteln gemäß der Beispiele 6 und 10 wurden wäßrige Emulsionen hergestellt, wobei Tallöl, das von der Firma KREMS CHEMIE im Handel erhältlich ist, und jeweils technisch reine Kalilauge zum Einsatz gekommen sind.

Im Beispiel 20 wurde Kokosfettbetain 30 %ig, das unter der Bezeichnung TEGO - EK 7A von der Firma GOLDSCHMIDT AG. bezogen werden kann, als Emulgator eingesetzt.

Als Pigmente kamen

```
bei Beispiel 17 BAYFERROX GELB 142            Firma BAYER

bei Beispiel 18 CHROMOXID GRÜN GN             - " -

bei Beispiel 19 BAYFERROX ROT 130 B           - " -

bei Beispiel 20 POLYMON SCARLET HFH und       Firma ICI

bei Beispielen 21, 22 ULTRAMARINBLAU 54       Firma Reckitts
                                              Colour S.A.
```

zum Einsatz.

Die erhaltenen Emulsionen waren lagerstabil, und es mußte lediglich vor Einsatz eine Homogenisierung bezüglich der Feststoffe, d. h. der Pigmente, durchgeführt werden, wobei die Suspension 18 auch gemeinsam mit Zement, beispielsweise Portlandzement, verarbeitet werden kann.

Wie den den Beispielen 1 bis 4 zu entnehmen ist, entsprechen die Beläge mit den Bindemitteln in keiner Form der Anforderung an Verkehrsflächen, so sind der Tragwert und die Formbeständigkeit zu nieder, woraus ein zu hoher Abrieb und geringe Kantenfestigkeit resultieren.

Ein handelsübliches Tallöl (Einsatzprodukt für die Herstellung der verwendeten Tallölpechsorten) wurde gemäß seiner Säurezahl mit Ca(OH)$_2$ technisch rein bei 150° C gehärtet und mit den in den Beispielen 5 bis 12 beschriebenen Komponenten modifiziert.

In den Beispielen 23 bis 45 kam als Gestein ein Edelkantkorn der Firma Hollitzer AG (Dolomit) gemäß Tabelle V (Siebdurchgang) zur Anwendung.

Als Faser wurde eine Zellulosefaser der Firma Technozell AG, Type 1004, verwendet.

Das Gummigranulat stammt von der Firma Merkur Gummiwerke AG in Wien und fällt bei Runderneuerungsarbeiten von Reifen als Fräsgummi an.

In den Beispielen 23 bis 26 sind Sportplatzbeläge angeführt, die heiß verarbeitet werden können.

Die Beispiele 27 bis 32 zeigen auf, daß es mit Ca-gehärteten Tallölpechen mit weiterem Harzzusatz als Bindemittel möglich ist, Deckschichten bzw. Fertigteile mit Drainagewirkung herzustellen.

Die Beispiele 33 bis 38 zeigen die unterschiedliche Qualität von asphaltähnlichen Rezepturen in Abhängigkeit von unterschiedlichen Bindemittelzusammensetzungen.

Die Beispiele 40 und 41 zeigen die Wirkung von Polyethylen in Tallölpechrezepturen.

Die Beispiele 41 bis 45 belegen die gute Verträglichkeit der erfindungsgemäßen Zusammensetzungen in Hinblick auf Pigmentierfähigkeit.

T A B E L L E    I

| Beispiel | 1 | 2 | 3 | 4 | 5 | 6 |
|---|---|---|---|---|---|---|
| Tallölpech Ca-gehärtet | A | B | C | D | A | B |
| in Gew.-% | 100,0 | 100,0 | 100,0 | 100,0 | 70,0 | 70,0 |
| Tallölharz in Gew.-% | – | – | – | – | – | 30,0 |
| Polyethylen in Gew.-% | – | – | – | – | 30,0 | – |
| SBS in Gew.-% | – | – | – | – | – | – |
| Öl in Gew.-% | – | – | – | – | – | – |
| Erweichungs- punkt Ring und Kugel °C | 37,5 | 44,0 | 58,5 | 85,0 | 72,0 | 45,0 |
| Nadel- penetration bei 25°C 0,1 mm | 188,0 | 142,0 | 50,0 | 29,0 | 37,0 | 102,0 |
| Duktilität bei 25°C cm | – | 45,0 | – | – | 15,0 | 62,0 |
| Brechpunkt °C | –26,0 | –34,0 | –24,0 | –28,0 | –8,0 | –18,0 |
| Farbe | – | – | – | – | – | – |
| elastische Rückformung Rel.-% | 0 | 0 | 0 | 0 | 0 | 0 |
| Haftfestigkeit ÖNORM B3682 | 77,0 | 75,0 | 70,0 | 70,0 | 98,0 | 87,0 |

T A B E L L E    II

| Beispiel | 7 | 8 | 9 | 10 | 11 |
|---|---|---|---|---|---|
| Tallölpech Ca-gehärtet in Gew.-% | C 50,0 | D 80,0 | B 87,7 | B 67,7 | B 79,0 |
| Tallölharz in Gew.-% | 30,0 | 20,0 | – | 20,0 | – |
| Polyethylen in Gew.-% | – | – | – | – | – |
| SBS in Gew.-% | – | – | 7,0 | 7,0 | 12,0 |
| Öl in Gew.-% | 20,0 | – | 5,3 | 5,3 | 9,0 |
| Erweichungs- punkt Ring und Kugel °C | 48,0 | 87,0 | 64,0 | 68,0 | 98,0 |
| Nadel- penetration bei 25°C 0,1 mm | 113,0 | 12,0 | 120,0 | 113,0 | 85,0 |
| Duktilität bei 25°C cm | 59,0 | – | 50,0 | 73,0 | 42,0 |
| Brechpunkt °C | -23,0 | -20,0 | -39,0 | -25,0 | -40,0 |
| Farbe | – | – | – | – | – |
| elastische Rückformung Rel.-% | 0 | 0 | 92,0 | 95,0 | 99,5 |
| Haftfestigkeit ÖNORM B3682 | 87,0 | 82,0 | – | – | – |

# T A B E L L E   III

| Beispiel | 12 | 13 | 14 | 15 | 16 |
|---|---|---|---|---|---|
| Tallölpech Ca-gehärtet in Gew.-% | E 100,0 | E 70,0 | E 50,0 | E 70,0 | E 50,0 |
| Polyethylen in Gew.-% | – | – | – | 30,0 | 25,0 |
| SBS in Gew.-% | – | – | 25,0 | – | – |
| Öl in Gew.-% | – | 30,0 | 25,0 | – | 25,0 |
| Erweichungs- punkt Ring und Kugel $^0$C | 97,0 | 84,2 | 88,0 | 92,0 | 94,0 |
| Nadel- penetration bei 25$^0$C 0,1 mm | 4 | 25 | 33 | 14 | 28 |
| Duktilität bei 25$^0$C cm | 0 | 0 | 13 | 0 | 0 |
| Brechpunkt $^0$C | +7,0 | +5,0 | –1,0 | +11,0 | +2,0 |
| Farbe | r o t   s c h i m m e r n d | | | | |
| elastische Rückformung Rel.-% | 0 | 0 | 70 | 0 | 23 |

T A B E L L E   IV

```
==============================================================
Beispiel          17      18      19      20      21      22
==============================================================

Bindemittel
in Gew.-%       60,00   60,00   70,00   60,00   60,00   50,00
gem. Beispiel      6       6       6      10      10      10


KOH
in Gew.-%        0,08    0,04    0,08    0,08    0,04    0,08


Emulgator
in Gew.-%        3,00    4,00    3,00    3,00    4,00    3,00


Pigment
in Gew.-%        7,00    7,00    7,00    7,00    7,00    7,00


Wasser
in Gew.-%       29,92   28,96   19,92   29,92   28,96   39,92
```

T A B E L L E   V

```
=======================================================
Beispiel          23      24      25      26
=======================================================

Bindemittel
in Gew.-%         23,0    23,0    23,0    23,0
gem. Beispiel      11       7       7      11

Gestein
Siebdurchgang a*)
in Gew.-%         50,0    70,0    70,0    70,0

Fasern
in Gew.-%          -       -       0,5      -

Gummigranulat
in Gew.-%         27,0    17,0    16,5    17,0

Verarbeitungs-
temperatur 0C    135,0   135,0   135.0   135,0

Abrieb            gut     sehr   schlecht gut
                          schlecht

UV-               sehr         genügend      sehr
Beständigkeit     gut                        gut
```

```
*)              Siebdurchgang
                  in Gew.-%
     mm           a              b

    11,2        100,0          100,0
     8,0        100,0           96,5
     4,0         96,8           24,2
     2,0         62,5           12,3
     1,0         40,1           11,2
     0,5         28,5           10,6
     0,25        22,1           10,4
     0,09        15,5           10
```

TABELLE VI

| Beispiel | 27 | 28 | 29 | 30 | 31 | 32 |
|---|---|---|---|---|---|---|
| Bindemittel in Gew.-% gem. Beispiel | $\frac{5,5}{10}$ | $\frac{5,5}{10}$ | $\frac{5,5}{9}$ | $\frac{5,5}{9}$ | $\frac{5,5}{4}$ | $\frac{5,5}{4}$ |
| Gestein Siebdurchgang b*) in Gew.-% | 94,5 | 94,0 | 94,5 | 94,0 | 94,5 | 94,0 |
| Fasern in Gew.-% | – | 0,5 | – | 0,5 | – | 0,5 |
| Gummigranulat in Gew.-% | – | – | – | – | – | – |
| Verarbeitungs- temperatur °C | 135,0 | 135,0 | 135,0 | 135,0 | 135,0 | 135,0 |
| Abrieb | gut | sehr gut | gut | sehr gut | sehr gut | sehr schlecht |
| UV- Beständigkeit | sehr gut | sehr gut | sehr gut | sehr gut | gut | gut |
| Hohlraum in Vol.-% | 18,3 | 20,1 | 19,0 | 19,9 | 17,9 | 18,4 |
| Fließwert in mm | 3,8 | 4,0 | 3,9 | 3,8 | 5,8 | 4,9 |
| Tragwert in kN | 9,0 | 11,0 | 8,5 | 10,0 | 2,4 | 3,0 |

# T A B E L L E   VII

| Beispiel | 33 | 34 | 35 | 36 | 37 | 38 |
|---|---|---|---|---|---|---|
| Bindemittel in Gew.-% gem. Beispiel | 4,5 1 | 4,5 4 | 4,5 6 | 4,5 5 | 4,5 7 | 4,5 9 |
| Pigment in Gew.-% | - | - | - | - | - | - |
| Fasern in Gew.-% | - | - | - | - | - | - |
| Gestein Siebdurchgang a*) in Gew.-% | 95,5 | 95,5 | 95,5 | 95,5 | 95,5 | 95,5 |
| Gummigranulat in Gew.-% | - | - | - | - | - | - |
| Verarbeitungs- temperatur 0C | 135,0 | 135,0 | 135,0 | 135,0 | 135,0 | 135,0 |
| Fließwert in mm | 9,0 | 2,1 | 4,2 | 3,0 | 5,0 | 4,5 |
| Tragwert in kN | 2,6 | 1,3 | 5,0 | 14,0 | 4,2 | 5,5 |
| Abrieb Praxistest | sehr schlecht | sehr schlecht | genü- gend | sehr gut | genü- gend | gut |

## T A B E L L E    VIII

====================================================================

| Beispiel | 39 | 40 | 41 | 42 | 43 |
|---|---|---|---|---|---|

====================================================================

| Bindemittel in Gew.-% gem. Beispiel | 4,5 11 | 4,5 5 | 4,5 7 | 4,5 9 | 4,5 11 |
|---|---|---|---|---|---|
| Pigment in Gew.-% | − | 0,5 | 1,0 | 2,0 | 5,0 |
| Fasern in Gew.-% | − | − | − | − | − |
| Gestein Siebdurchgang in Gew.-% | a*) 95,5 | [ 95,0 | Siebdurchgang AB4 94,5 | 93,5 | 90,5 ] |
| Gummigranulat in Gew.-% | − | − | − | − | − |
| Verarbeitungs- temperatur 0C | 135,0 | 135,0 | 135,0 | 135,0 | 135,0 |
| Fließwert in mm | 4,0 | 3,1 | 4,5 | 4,9 | 4,0 |
| Tragwert in kN | 6,3 | 6,3 | 5,0 | 5,3 | 6,0 |
| Abrieb Praxistest | sehr gut | sehr gut | genü- gend | gut | sehr gut |

## T A B E L L E    IX

| ===================================== | | |
| Beispiel | 44 | 45 |
| ===================================== | | |
| Bindemittel in Gew.-% gem. Beispiel | 13,0 4 | 13,0 5 |
| Pigment in Gew.-% | 0,7 | 0,7 |
| Fasern in Gew.-% | – | – |
| Gestein Siebdurchgang GA8 in Gew.-% | 86,3 | 86,3 |
| Gummigranulat in Gew.-% | – | – |
| Verarbeitungs- temperatur °C | 220,0 | 220,0 |
| Kugeleindruck in mm | 57,0 | 36,0 |
| chemische Beständigkeit: | | |
| HCl, 10 %ig | +/– | + |
| NaOH, 10 %ig | +/– | + |
| Benzol | – | + |
| Toluol | – | +/– |
| CCl₄ | – | +/– |

Patentansprüche:

## Patentansprüche

1. Bitumenfreies Bindemittel für Baustoffe, insbesondere für Beläge für Verkehrsflächen, Sportflächen od. dgl., mit natürlichen Harzen, insbesondere thermoplastischen, Kunststoffen, gegebenenfalls Ölen, Pigmenten, Zuschlagsstoffen od. dgl., dadurch gekennzeichnet, daß es 50,0 Gew.-% bis 90,0 Gew.-%, insbesondere 60,0 Gew.-% bis 70,0 Gew.-%, kalziumgehärtetes Tallölpech, 3,0 Gew.-% bis 25,0 Gew.-%,

insbesondere 10,0 Gew.-% bis 20,0 Gew.-%, insbesondere thermoplastische, Kunststoffe und 0,0 Gew.-% bis 20,0 Gew.-%, insbesondere 5,0 Gew.-% bis 10,0 Gew.-%, insbesondere naphthenische, Öle enthält.

2. Bitumenfreies Bindemittel nach Anspruch 1, dadurch gekennzeichnet, daß es 5,0 Gew.-% bis 25,0 Gew.-%, insbesondere 10,0 Gew.-% bis 20,0 Gew.-%, Styrolbutadienstyrolcopolymerisat enthält.

3. Bitumenfreies Bindemittel nach Anspruch 2 oder 3, dadurch gekennzeichnet, daß es 5,0 Gew.-% bis 25,0 Gew.-%, insbesondere 10,0 Gew.-% bis 20,0 Gew.-%, Polyethylen enthält.

4. Bitumenfreies Bindemittel nach einem der Ansprüche 1, 2 oder 3, dadurch gekennzeichnet, daß es 0,3 Gew.-% bis 10,0 Gew.-%, insbesondere 0,5 Gew.-% bis 1,0 Gew.-%, insbesondere anorganische, Pigmente enthält.

5. Baustotfmischung mit einem der Bindemittel nach einem der Ansprüche 1 bis 4, dadurch gekennzeichnet, daß sie 20,0 Gew.-% bis 97,0 Gew.-%, insbesondere 85,0 Gew.-% bis 97,0 Gew.-%, anorganische Zuschlagsstoffe mit einer maximalen Korngröße von 2,0 mm bis 32,0 mm, insbesondere 4,0 mm bis 16,0 mm, enthält.

6. Baustoffmischung nach Anspruch 5, dadurch gekennzeichnet, daß sie 10,0 Gew.-% bis 80,0 Gew.-%, insbesondere 15,0 Gew.-% bis 25,0 Gew.-%, Gummigranulat mit einer maximalen Korngröße von 1,0 mm bis 50,0 mm, insbesondere 3,0 mm bis 5,0 mm, enthält.

7. Wäßrige Emulsion mit einem Bindemittel nach einem der Ansprüche 1 bis 4, dadurch gekennzeichnet, daß sie 50,0 Gew.-% bis 70,0 Gew.-%, insbesondere 60,0 Gew.-% bis 65,0 Gew.-%, des Bindemittels, 2,0 Gew.-% bis 5,0 Gew.-%, insbesondere 3,0 Gew.-% bis 5,5 Gew.-%, Tallöl sowie weitere Zusatzstoffe und Rest Wasser enthält.

8. Wäßrige Emulsion nach Anspruch 7, dadurch gekennzeichnet, daß sie zusätzlich, insbesondere 0,01 Gew.-% bis 0,1 Gew.-%, Kalilauge enthält.

Europäisches
Patentamt

# EUROPÄISCHER RECHERCHENBERICHT

Nummer der Anmeldung

EP 92 89 0083

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | WO-A-8 906 259 (E.J. TRIEB et al.) <br> * Patentansprüche * <br> --- | 1-3 | C 08 L 93/00 <br> E 01 C 7/30 <br> E 01 C 13/00 |
| A | DE-A-3 635 283 (BAYERISCHE ASPHALT-MISCHWERKE GmbH) <br> * Zusammenfassung * <br> --- | 1 | |
| A | EP-A-0 304 767 (KY, O PINOMAA) <br> * Ansprüche 1,5,7-11 * <br> --- | 1-4 | |
| A | W. SANDERMANN: "Naturharze Terpentinöl . Tallöl Chemie und Technologie", 1960, Seiten 418-420,428, Springer-Verlag, Berlin, DE <br> * Seite 419, Zeilen 17-19 * <br> ----- | 1 | |

**RECHERCHIERTE SACHGEBIETE (Int. Cl.5)**

C 08 L
E 01 C

Der vorliegende Recherchenbericht wurde für alle Patentansprüche erstellt

| Recherchenort | Abschlußdatum der Recherche | Prüfer |
|---|---|---|
| DEN HAAG | 31-07-1992 | CATURLA VICENTE V. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument